(19) Europäisches Patentamt
European Patent Office
Office européen des brevets

(11) **EP 1 887 676 A1**

(12) **EUROPEAN PATENT APPLICATION**
published in accordance with Art. 153(4) EPC

(43) Date of publication:
**13.02.2008 Bulletin 2008/07**

(51) Int Cl.:
*H02K 7/116* (2006.01)

(21) Application number: **06745413.2**

(22) Date of filing: **18.04.2006**

(86) International application number:
**PCT/JP2006/308131**

(87) International publication number:
**WO 2006/118022 (09.11.2006 Gazette 2006/45)**

(84) Designated Contracting States:
**CH DE LI**

(30) Priority: **28.04.2005 JP 2005130684**

(71) Applicant: **Namiki Seimitu Houseki Kabushiki Kaisha**
**Adachi-ku,**
**Tokyo 123-8511 (JP)**

(72) Inventors:
 • **Shimizu, Yukiharu**
  **c/o Namiki Seimitsu Houseki K.K.**
  **Tokyo; 1238511 (JP)**

 • **Fukushima, Eri**
  **c/o Namiki Seimitsu Houseki K. K.**
  **Tokyo; 1238511 (JP)**
 • **Watanabe, Daichi**
  **c/o Namiki Seimitsu Houseki K. K.**
  **Tokyo; 1238511 (JP)**

(74) Representative: **Kitzhofer, Thomas**
 **Prinz & Partner GbR**
 **Rundfunkplatz 2**
 **80335 München (DE)**

(54) **MOTOR SHAFT FOR MICROMOTOR, AND MICROMOTOR**

(57)     [Problems] A motor shaft for a micromotor where a high reduction ratio can be obtained by a speed-reduction gear mechanism and where high coaxiality between the motor shaft and a pinion can be achieved.

[Means for Solving problems] The invention is based on the fact that, because a micromotor has a very small motor torque, even a pinion having a diameter smaller than that of a shaft has sufficient strength for the motor torque. Based on this, the motor shaft of the invention has a pinion integrally formed on the front end side of the shaft and the pinion has an outer diameter equal to or less than that of the shaft. Because the pinion can be sufficiently reduced in diameter, a high reduction ratio can be obtained by a speed-reduction gear mechanism. In addition, since the pinion can be integrally formed on the motor shaft, high coaxiality between the shaft and the pinion can be achieved.

Figur 1

EP 1 887 676 A1

## Description

### Technical Field

The present invention relates a motor shaft for a micromotor used as a driving source of various small-sized apparatuses, a micromotor provided with the motor shaft, and a micro geared motor.

### Background Art

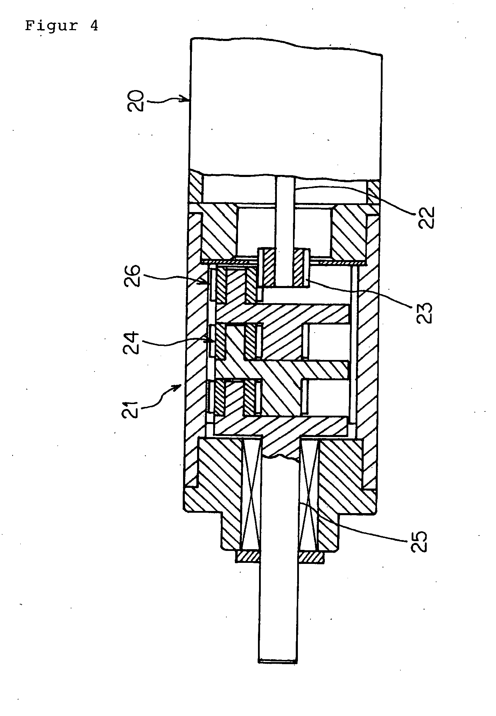

Conventionally, a micromotor having an outer diameter of about several millimeters is used as a driving source of a vibrator in a silent mode, which is built in a mobile phone. Such a micromotor is expected to be widely used as a driving source of various advanced apparatuses such as medical instruments(for example, a lens driving mechanism of a front-end portion of an endoscope and a driving mechanism for a fetal diagnosis treatment apparatus).
In general, in case of a micromotor used for a small-sized apparatus such as a medical instrument, a micro geared motor provided with a gear head having a speed-reduction gear mechanism is assembled into the apparatus(for example, refer to Patent Reference 1).
Patent Reference 1 : Japanese Patent Application Laid-Open No. 2001-119894
As shown in FIG. 4, the micro geared motor is constructed with a motor unit (micromotor) 20 in which a pinion 23 is fixedly jointed to a motor shaft 22 and a speed-reduction gear head unit 21 which is drivingly connected to the motor unit 20 through the pinion 23. The pinion 23 is fixedly jointed to the motor shaft 22 by pressing or adhering the motor shaft 22 into a jointing hole (central penetrating hole) of the pinion. The speed-reduction gear head unit 21 includes a speed-reduction gear mechanism portion 24, of which first stage gear 26 is engaged with the pinion 23, so that a driving force of the motor shaft 22 is transmitted through the speed-reduction gear mechanism portion 24 to an output shaft 25.

### Disclosure of the Invention

### Problems to be Solved

Some apparatuses provided with a micro geared motor may require a high reduction ratio by using a speed-reduction gear mechanism portion. The reduction ratio is defined according to a relation between a teeth number of the gear of the speed-reduction gear mechanism portion and a teeth number of the pinion of the motor shaft. In general, the larger the teeth number of the gear of the speed-reduction gear mechanism portion is, that is, the smaller the teeth number of the pinion is, the higher reduction ratio can be obtained. However, since the speed-reduction gear head unit has a limitation in size (diameter), the teeth number of the gear of the speed-reduction gear mechanism portion cannot be increased without limitation. In addition, in the micro geared motor having the aforementioned construction, the diameter of the pinion cannot be decreased without limitation. Therefore, the conventional micro geared motor has a problem in that a sufficiently high reduction ratio cannot be obtained.
In addition, the conventional micromotor in which the pinion is jointed to the motor shaft by using an adhering method or a pressing method has the following problems in the jointing structure.

(a) Since a process for adhering or pressing the motor shaft into the micro-sized pinion is needed, production cost is increased. In addition, since a jointed portion therebetween is loosened during repetitive operations, a problem of pinion slip or the like may occur.
(b) Since such micro-sized members are jointed, it is difficult to acquire coaxiality between the motor shaft and the pinion. Therefore, the pinion and the first stage gear of the speed-reduction gear mechanism portion cannot be engaged with each other in a good state, so that a disorder or a noise may occur in the motor.

In order to solve the aforementioned problems, the present invention provides to a motor shaft for a micromotor capable of obtaining a high reduction ratio by using a speed-reduction gear mechanism, acquiring high coaxiality between the motor shaft and a pinion, and avoiding a problems such as pinion slip.
The present invention also provides a micromotor provided with the motor shaft and a micro geared motor provided with the motor shaft.

### Means for Solving the Problems

As described above, in case of obtaining a high reduction ratio in a micro geared motor, due to a limitation to the size (diameter) of the motor, the teeth number cannot be increased by increasing the diameter of the gear in the speed-reduction gear mechanism portion. Therefore, the inventors have reviewed the associated techniques in terms of reducing the diameter of the pinion of the motor shaft. As a result, the inventors have an idea that, unlike the conventional structure where the pinion is jointed to the motor shaft through a jointing hole, the pinion is integrally formed to the motor shaft so that the diameter of the pinion can be very small, namely, equal to or smaller than that of the motor shaft. In terms of convention technique, it may be expected by the ordinarily skilled in the art that, since such a small-diameter pinion (having a diameter equal to or smaller than that of the motor shaft) has a very insufficient strength, the pinion (or a portion of the motor shaft) may be frequently destructed or fatigue-fractured due to loads of the motor torque. The inventors manufactured a micro geared motor having the aforementioned structure as a sample and performed repetitive operation test thereof. However, on the contrary to the expectation, the failure caused from the insufficient strength or the fatigue-fracture caused from repetitive loads of weight does not occur in the pinion, so that sufficient durability as a practicable level can be obtained. This performance is considered to be derived from the fact that a micro geared motor has a relatively small motor torque (typically, several to hundreds $\mu$Nm) in comparison to a general motor or other small-sized motors, and thus, a pinion having a diameter equal to or smaller than that of a motor shaft has a sufficient strength against the motor torque. In addition, this performance unique to the micro geared motor is not known or disclosed in the related art.

The present invention is contrived based on the aforementioned idea and knowledge. The present invention has the following features.

(1) A motor shaft for a micromotor, wherein a pinion having an outer diameter equal to or smaller than that of the shaft is integrally formed on a front end side of the shaft.
(2) In the motor shaft having the feature (1), the outer diameter of the shaft is equal to or less than 1mm.
(3) A micromotor having the motor shaft having the feature (1) or (2).
(4) In the micromotor having the feature (3), an outer diameter of the micromotor is equal to or less than 4mm.

(5) A micro geared motor includes a motor unit including the micromotor having the feature (3) or (4), and a speed-reduction gear head unit which is drivingly connected to the motor unit through a pinion formed on a motor shaft.

(6) In the micro geared motor having the feature (5), a teeth number of the pinion and a teeth number of speed-reduction gear are defined so that a reduction ratio between the pinion formed on the motor shaft of the motor unit and a first-stage speed-reduction gear of the speed-reduction gear head unit is equal to or more than 5.
(7) In the micro geared motor having the feature (5) or (6), the motor unit is a brushless motor, and a speed-reduction gear mechanism of the speed-reduction gear head unit is a planetary-gear speed-reduction mechanism.
(8) In the micro geared motor having any one of the features (5) to (7), wherein an outer diameter of the micro geared motor is equal to or less than 4mm.

**Effect of the Invention**

In a motor shaft for a micromotor, a micromotor provided with the motor shaft, and a micro geared motor provided with the motor shaft, since a pinion having a sufficiently small diameter can be implemented, a high reduction ratio can be obtained by a speed-reduction gear mechanism. In addition, since the pinion is integrally formed on the motor shaft, high coaxiality between the motor shaft and the pinion can be acquired. Accordingly, a motor having a low failure rate, a long lifecycle, and a low noise can be implemented. Moreover, the problem of pinion slip can be prevented. In addition, since a jointing process for the pinion by adhering, pressing, or the like is unnecessary, the number of production processes or production cost can be reduced.

**Best Mode for Carrying Out the Invention**

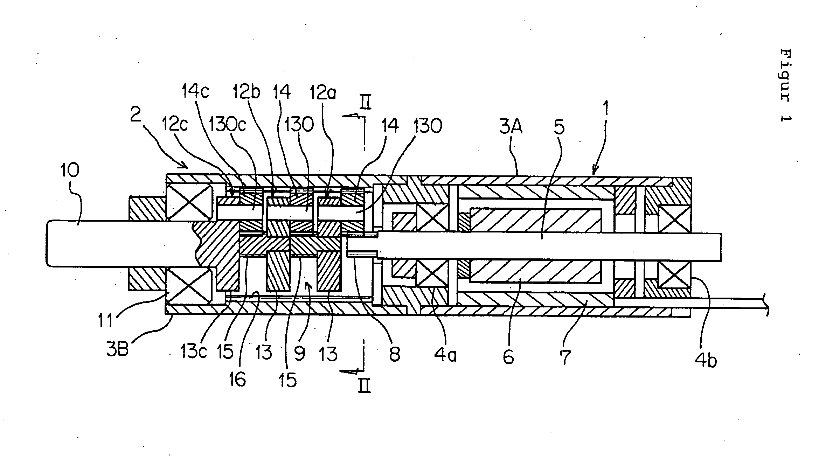

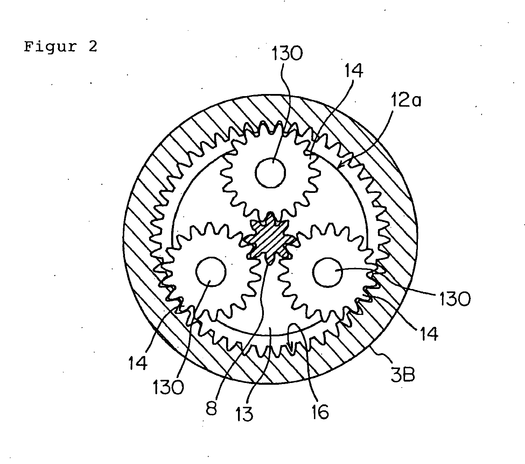

FIGS. 1 to 3 illustrates a motor shaft and a micro geared motor provided with the motor shaft according to an embodiment of the present invention. FIG. 1 is a longitudinal cross-sectional view illustrating the micro geared motor. FIG. 2 is a cross-sectional view taken along line II-II of FIG. 1.
In the figures, reference numeral 1 denotes a motor unit constructed with the micromotor, and reference number 2 denotes a speed-reduction gear head unit which is drivingly connected to the motor unit 1 through a pinion of a motor shaft. It should be noted that a micromotor according to the embodiment of the present invention does not have the speed-reduction gear head unit 2.
In the present invention, since the motor unit 1 can be constructed with an arbitrary micromotor, a coreless motor or a brushless motor may be used. In the embodiment, the motor unit 1 is constructed with a brushless motor. More specifically, the motor unit 1 includes a housing 3A, motor-shaft bearings 4a and 4b, a motor shaft 5 which is rotably supported by the bearings 4a and 4b, a rotor magnet 6 which is fixed on an outer circumference of the motor shaft between the bearings 4a and 4b, and a stator coil 7 which is fixed to an inner side of the housing 3A to face the rotor magnet 6. Accordingly, the structure of the motor unit 1 of the micro geared motor according to the present invention is the same as that of a conventional micro geared motor.

A pinion 8 is integrally formed on a front end portion of the motor shaft 5. The pinion 8 has an outer diameter equal to or smaller than that of the motor shaft 5.

In general, the pinion 8 is formed by performing a cutting process such as a hob process or a rolling process on the motor shaft 5. However, other processes, for example, a process of attaching a member provided with a pinion to the front end portion of the motor shaft may be used to form the pinion 8.

In a case where the pinion 8 is formed by performing the cutting process or the rolling process on the motor shaft 5, a member for shaft, which is a rod made of stainless steel or the like, is subjected to a centerless process to adjust a dimension accuracy of an outer diameter and a surface roughness of the member. The cutting process or the rolling process is performed on the front end portion of the member to form the pinion 8. Subsequently, a thermal treatment process, a barrel polishing process, and the like are performed to obtain the motor shaft 5 provided with the pinion 8. Although the pinion 8 is formed on the front end side of the motor shaft 5 in the embodiment, the position thereof may not be in the foremost end portion of the motor shaft 5.

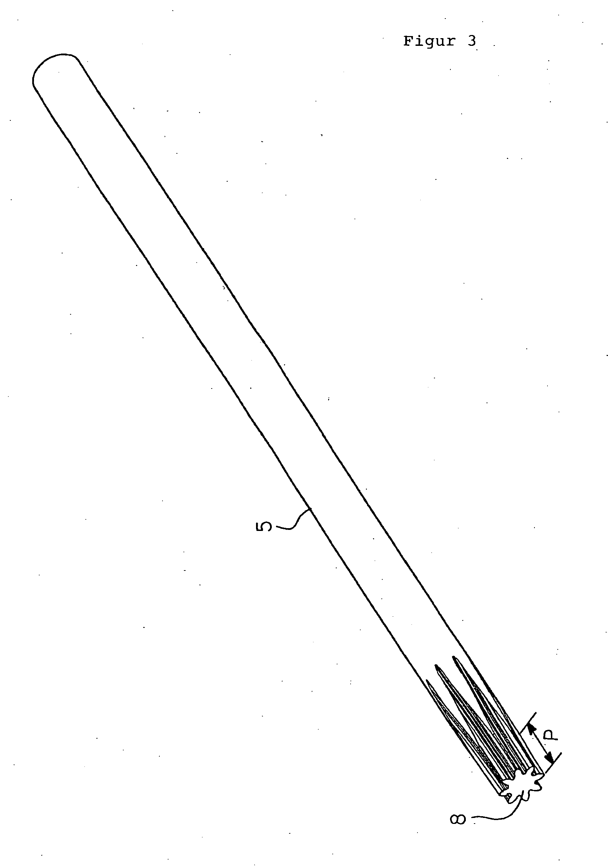

FIG. 3 is a detailed perspective view illustrating a structure of the pinion 8. The pinion 8 is formed by performing a hob process on the front end portion of the motor shaft 5. In the figure, the pinion 8 is indicated by a region P.

As described above, a general-sized motor or a small-sized motor larger than the micromotor has a corresponding motor torque. In this case, if a diameter of pinion is designed to be too small, large stress is exerted to a teeth portion of the pinion, so that the motor may be easily destructed or fatigue-fractured. On the contrary, in case of a micromotor having a typical outer diameter of 4mm or less, the motor torque is very small, that is, in a range of several to hundreds $\mu$Nm. Therefore, even in a case where the largest load is exerted to the pinion in the locked state, the teeth portion of the pinion is not destructed and fatigue-fractured under repetitively exerted load. The inventors manufactured a test micromotor having a diameter of 2mm. The motor torque of the micromotor was measured to be $7\mu$Nm.

In the present invention, the feature that the outer diameter of the pinion 8 is designed to be equal to or smaller than that of the motor shaft 5 is intended to reduce the size of the pinion in order to obtain a high reduction ratio. Moreover, in a case where the pinion 8 is formed by performing the cutting process or the rolling process on the motor shaft 5, the following additional advantage can be obtained by the feature that the outer diameter of the pinion 8 is designed to be equal to or smaller than that of the motor shaft 5. If the outer diameter of the pinion is designed to be larger than that of the motor shaft, the non-processed motor shaft before the formation of pinion is in a shape of bar with different-diameter steps, and particularly, it is difficult to perform a high-accuracy finishing process for the outer diameter and surface roughness of the cut-processed motor shaft. However, if the outer diameter of the pinion is designed to be smaller than that of the motor shaft, the non-processed motor shaft before the formation of pinion is in a shape of rod without steps, and it is possible to perform a high-accuracy finishing process for the outer diameter and surface roughness of the motor shaft by using a centerless process. Subsequently, the pinion is formed to the centerless processed motor shaft, and a thermal treatment process, a barrel polishing process, and the like are processed thereto, so that the motor shaft 5 provided with the pinion 5 can be obtained.

In a case where the outer diameter of the pinion integrally formed to the motor shaft is designed to be larger than that of the motor shaft, the motor shaft needs to be fixed to the rotor magnet using an adhesive in the state that the motor shaft has penetrated the bearing (gear head side) in a direction from the front side. Therefore, due to the interposed bearing, it is difficult to fix the motor shaft to the rotor magnet with a high accuracy. In addition, if the used adhesive is flown out, a difficult process for wiping out the adhesive is needed. However, in the micromotor according to the present invention in which the outer diameter of the pinion 8 is smaller than that of the motor shaft 5, since the motor shaft 5 and the rotor magnet 6 can be fixed to each other in advance, a high-accuracy assembly can be easily performed.

There is no specific limitation to the outer diameter of the motor or the outer diameter of the motor shaft 5 according to the present invention. As described above, even in a case where the pinion 9 having an outer diameter smaller than that of the motor shat 5 is integrally formed on the micro shaft 5 of the micromotor, sufficient durability in terms of strength of the pinion 8 can be obtained as a feature unique to the micromotor that has a vary small motor torque. Particularly, a micromotor (micro geared motor) in which an outer diameter of a motor is 4mm or less and an outer diameter of a motor shaft is 1mm or less can be very suitable used.

In addition, there is no specific limitation to upper and lower limits of the outer diameter of the pinion under the condition that the outer diameter of the pinion 8 is smaller than that of the motor shaft 5. However, it is preferable that the outer diameter of the pinion 8 is about 80% of that of the motor shaft 5 in terms of the strength thereof.

The speed-reduction gear head unit 2 has a housing 3B, a speed-reduction gear mechanism portion 9 to which the pinion 8 is drivingly connected, and an output shaft 10 which is disposed at an output side (front end side) thereof to be rotably supported by a bearing 11. The pinion 8 is engaged with a first stage gear of the speed-reduction gear mechanism portion 9.

The speed-reduction gear mechanism portion 9 of the speed-reduction gear head unit 2 may have an arbitrary structure. Therefore, various types of reduction mechanism can be used. In the embodiment, a planetary gear reduction mechanism is used. The structure of the planetary gear reduction mechanism is basically the same as that of the conventional reduction mechanism illustrated in FIG. 4. Particularly, in the embodiment, two sets of independent carrier units 12a and 12b and one set of carrier unit 12c which is provided to a base end portion of the output shaft 10. The carrier units 12a, 12b, and 12c are sequentially arranged in a direction from the motor unit 1 to the output shaft 10.

In each of the carrier units 12a and 12b, three planetary-gear supporting shafts 130 are disposed to protrude from a surface on the motor unit side with an equally divided angle of 120 degree in a circumferential direction, and a plate-shaped carrier 13 from which a sun gear 15 protrudes at a center of a surface on a counter motor unit side is provided. In addition, three planetary gears 14 which are disposed with an equally divided angle of 120 degree are rotably supported by the corresponding shafts 130.

In the carrier unit 12c, three planetary-gear supporting shafts 130c are disposed to protrude from the surface on the motor unit side with an equally divided angle of 120 degree in the circumferential direction, and a plate-shaped carrier 13c in which the output shaft 10 is fixed on the base end portion (or integrally formed at the base end portion) at a center of a surface on a counter motor unit side. In addition, planetary gears 14c rotably supported by the corresponding shafts 130c.

In addition, an inner gear 16 is formed on an inner surface of the housing 3B in which the speed-reduction gear mechanism portion 9 is disposed.

In the speed-reduction gear mechanism portion 9, the planetary gears 14 and 14c of the carrier units 12a to 12c are engaged with the corresponding inner gears 16, and with respect to the adjacent carrier units among the carrier units 12, each sun gear 15 of the carrier units 12 at the motor unit side is engaged with three planetary gears 14 and 14c of the carrier units 12 at the counter motor unit side. In addition, three planetary gears 14 of the first-stage carrier unit 12a are engaged with the pinion 8 of the motor shaft 5. Due to the structure, the rotation of the pinion 8 is transmitted through the three carrier units 12a to 12c to the output shaft 10, and the number of rotation is sequentially reduced with the following reduction ratio.

$$\text{Reduction Ratio} = (Z3/Z1+1)$$

Z1: Teeth Number of Pinion 8 or Sun Gear 15
Z3: Teeth Number of Inner Gear 16

Finally, the reduced rotation is output from the output shaft 10.

It is preferable that the teeth number of the pinion 8 and the teeth number of the speed-reduction gear are defined so that the reduction ratio between the pinion 8 and the first stage speed-reduction gear (the inner gear 16 in the embodiment) of the speed-reduction gear mechanism portion 9 is equal to or more than 5. The reduction ratio of 5 or more cannot be obtained by the conventional micro geared motor illustrated in FIG. 4, but can be easily obtained according to the present invention.

The reduction ratio of the micro geared motor according to the conventional example illustrated in FIG. 4 and the reduction ratio of the micro geared motor according to the embodiment of the present invention illustrated in FIG. 1 are listed below.

[Convention Example]

Teeth Number Z1 of Pinion (= Sun Gear): 14
Teeth Number Z2 of Planetary Gear: 15
Teeth Number Z3 of Inner Gear: 46

$$\text{Reduction Ratio} = (Z3/Z1+1) \approx 4.286 \ (4.286:1)$$

[Embodiment of the Present Invention]

Teeth Number Z1 of Pinion (= sun gear): 8
Teeth Number Z2 of Planetary Gear: 18
Teeth Number Z3 of Inner Gear: 46

$$\texttt{Reduction Ratio} = \texttt{(Z3/Z1+1)} \approx 6.75 \; (6.75:1)$$

It can be understood that, according to the present invention, the reduction ratio can be increased by 50% or more in comparison to the conventional example.

**Brief Description of the Drawings**

FIG. 1 is a longitudinal cross-sectional view illustrating a micro geared motor according to an embodiment of the present invention;
FIG. 2 is a cross-sectional view taken along line II-II of FIG. 1;
FIG. 3 is a detailed perspective view illustrating a structure of a pinion formed to a front end side of a motor shaft according to the embodiment illustrated in FIG. 1; and
FIG. 4 is a longitudinal cross-sectional view illustrating an example of a conventional micro geared motor.

**Reference Numerals**

1: motor unit
2: speed-reduction gear head unit
3A, 3B: housing
4a, 4b: bearing
5: motor shaft
6: rotor magnet
7: stator coil
8: pinion
9: speed-reduction gear mechanism portion
10: output shaft
11: bearing
12a ~ 12c: carrier unit
13, 13c: carrier
130, 130c: planetary-gear supporting shaft
14, 14c: planetary gear
15: sun gear
16: inner gear

**Claims**

1.  A motor shaft for a micromotor, wherein a pinion having an outer diameter equal to or smaller than that of the shaft is integrally formed on a front end side of the shaft.

2.  The motor shaft for a micromotor according to claim 1, wherein the outer diameter of the shaft is equal to or less than 1mm.

3.  A micromotor having the motor shaft according to claim 1 or 2.

4. The micromotor according to claim 3, wherein an outer diameter of the micromotor is equal to or less than 4mm.

5. A micro geared motor, comprising:

   a motor unit including the micromotor according to claim 3 or 4; and
   a speed-reduction gear head unit which is drivingly connected to the motor unit through a pinion formed on a motor shaft.

6. The micro geared motor according to claim 5, wherein a teeth number of the pinion and a teeth number of a speed-reduction gear are defined so that a reduction ratio between the pinion formed on the motor shaft of the motor unit and a first-stage speed-reduction gear of the speed-reduction gear head unit is equal to or more than 5.

7. The micro geared motor according to claim 5 or 6, wherein the motor unit is a brushless motor, and wherein a speed-reduction gear mechanism of the speed-reduction gear head unit is a planetary-gear speed-reduction mechanism.

8. The micro geared motor according to any one of claims 5 to 7, wherein an outer diameter of the micro geared motor is equal to or less than 4mm.

Figur 1

Figur 2

Figur 3

EP 1 887 676 A1

Figur 4

11

| INTERNATIONAL SEARCH REPORT | International application No. |
|---|---|
| | PCT/JP2006/308131 |

A.   CLASSIFICATION OF SUBJECT MATTER
*H02K7/116*(2006.01)

According to International Patent Classification (IPC) or to both national classification and IPC

B.   FIELDS SEARCHED

Minimum documentation searched (classification system followed by classification symbols)
*H02K7/00-H02K7/20*(2006.01)

Documentation searched other than minimum documentation to the extent that such documents are included in the fields searched
Jitsuyo Shinan Koho            1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2001-119894 A  (Namiki Precision Jewel Co., Ltd.), 27 April, 2001 (27.04.01), Full text; all drawings (Family: none) | 1-8 |
| Y | JP 1-101526 A  (Canon Inc.), 19 April, 1989 (19.04.89), Full text; all drawings & US 4897681 A | 1-8 |
| Y | JP 2002-330570 A  (Fuji Xerox Co., Ltd.), 15 November, 2002 (15.11.02), Full text; all drawings (Family: none) | 1-8 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 July, 2006 (10.07.06) | 18 July, 2006 (18.07.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 887 676 A1**

| INTERNATIONAL SEARCH REPORT | International application No. |
|---|---|
| | PCT/JP2006/308131 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 139655/1985(Laid-open No. 48151/1987) (Nippondenso Co., Ltd.), 25 March, 1987 (25.03.87), Full text; all drawings (Family: none) | 1-8 |

Form PCT/ISA/210 (continuation of second sheet) (April 2005)

13

**EP 1 887 676 A1**

## REFERENCES CITED IN THE DESCRIPTION

**Patent documents cited in the description**

- JP 2001119894 A